# EUROPÄISCHE PATENTSCHRIFT

(11) **EP 1 721 514 B1**
(45) Veröffentlichungstag und Bekanntmachung des Hinweises auf die Patenterteilung: **03.12.2008**
(21) Anmeldenummer: 06002629.1
(22) Anmeldetag: 09.02.2006
(51) Int. Cl.: A01F 12/40

(54) **Srohhäcksler**
Straw chopper
Hache-paille

(30) Priorität: 11.05.2005 DE 102005022504
(43) Veröffentlichungstag der Anmeldung: 15.11.2006
(73) Patentinhaber: CLAAS Selbstfahrende Erntemaschinen GmbH, 33428 Harsewinkel (DE)
(72) Erfinder: Terörde, Stefan, 48231 Warendorf (DE)

(56) Entgegenhaltungen:
- EP-A- 1 319 331
- US-A- 3 698 168
- US-A- 4 211 060
- US-A1- 2003 060 246

## Beschreibung

Die Erfindung betrifft einen Strohhäcksler nach dem Oberbegriff des Anspruchs 1.

In der DE 101 46 773 A1 ist eine Befestigungsanordnung zur Befestigung von Schlägeln an einem Rotor eines Strohhäckslers offenbart. Die Befestigungsanordnung weist einen Bolzen auf, der in ein Loch in den Schlägeln und ein Loch in einer mit dem Rotor verbundenen Konsole einführbar ist und endseitig mit einem Verriegelungselement verbindbar ist.

Nachteilig bei dieser bekannten Befestigungsanordnung ist, dass der Bolzen aus den Messern sowie Konsolen herausgenommen werden muss, um die Messer zu wechseln, so dass sowohl der Bolzen, das Verriegelungselement, die Messer sowie Scheiben und Federn der Befestigungsanordnung nicht mehr mit der Messerwelle verbunden sind sondern lose vorliegen. Beim Messerwechsel besteht somit die Gefahr, dass Bauteile der gelösten Befestigungsanordnung herunterfallen und dadurch verloren gehen.

Die US 3,698,168 offenbart eine Befestigungsanordnung zum Verbinden eines Messers auf einer Mäher-Messerwelle. Die Befestigungsanordnung besteht aus mehreren Messerhaltern an denen jeweils an ihrem äußeren Ende ein Haken angeformt ist. Auf diesen Haken wird die Aussparung des Messers aufgeschoben, so dass das Messer um die Haken herum verschwenkbar sind. Um die Messer auf den Haken zu sichern sind auf der Welle mehrere Sperrglieder angeordnet, deren federelastischen Lappen die Haken hintergreifen. Zur Montage bzw. Demontage der Messer müssen die Lappen entgegen ihrer Federkraft verformt werden, um jeweils das Messer von dem Haken zu lösen, bzw. es auf ihn aufzuschieben. Nachteilig an einer derartigen Befestigungsanordnung ist es, dass die Federkraft der verformbaren Lappen derart ausgelegt sein muss, dass die Messer auch bei hohen Umdrehungen und gleichzeitiger mechanischer Belastung durch evtl. Fremdkörper nicht von den Haken rutschen. Diese hohe Federkraft der Lappen bedingt jedoch im Gegenzug einen sehr hohen Kraftaufwand bei der Montage bzw. Demontage der Messer. Weiterhin ist es nachteilig, dass die Federkraft aufgrund von Materialermüdung nachlässt, so dass insbesondere nach mehrmaligen Messerwechsel die Federkraft nicht mehr ausreichend sein kann, um das Messer sicher auf dem Haken zu halten.

Der Erfindung liegt daher die Aufgabe zugrunde die Nachteile des Standes der Technik zu vermeiden und insbesondere eine Befestigungsanordnung zu schaffen, bei der die Messer auswechselbar sind, ohne Einzelteile von der Messerwelle abnehmen zu müssen.

Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Dadurch, dass das Häckselmesser auf wenigstens ein freies Ende des mit der Welle verbundenen Bolzens aufgeschoben und mit wenigstens einem mit der Welle verbundenen Schnellverschluss auf dem Bolzen gesichert ist, müssen beim Messerwechsel bis auf das Häckselmesser keine Bauteile von der Messerwelle demontiert werden.

Dadurch, dass der Schnellverschluss in eine Öffnungsposition und eine Verschlussposition bewegbar ist, kann durch eine Änderung der Position des Schnellverschlusses das Häckselmesser entsichert werden, um das Häckselmesser vom Bolzen zu demontieren oder auf den Bolzen zu montieren.

In einer besonders vorteilhaften Ausgestaltung der Erfindung begrenzt der Schnellverschluss in der Verschlussposition den Schwenkbereich wenigstens eines Häckselmessers und oder wenigstens eines Bolzens, so dass eine für die Montage beziehungsweise Demontage erforderliche Lage der Bauteile zueinander nicht erreicht werden kann.

Vorteilhafterweise weist die Welle auf ihrem Umfang wenigstens eine Konsole auf, wobei der Bolzen an der Konsole angeordnet ist, so dass die auf den Bolzen montierten Häckselmesser einseitig gegen die Konsolen anschlagen.

In besonders vorteilhafter Weiterbildung der Erfindung ist der Bolzen drehfest mit der Konsole verbunden und weist an wenigstens einem freien Ende ein Kopfteil auf, damit das Häckselmesser zwischen der Konsole und dem Kopfteil auf dem Bolzen gesichert ist.

Dadurch, dass das Kopfteil ein spezifisch geformtes Kopfteil ist und das Häckselmesser ein zu dem spezifisch geformten Kopfteil des Bolzens negatives Gegenstück aufweist, lässt sich das Häckselmesser in genau einer Lage des Häckselmessers zum Bolzen auf den Bolzen aufschieben bzw. heruntemehmen.

In einer ersten vorteilhaften Ausführung ist das spezifisch geformte Kopfteil ein Anschlag mit einen nockenförmigen Querschnitt ist und das Häckselmesser weist als negatives Gegenstück eine Bohrung auf, deren Querschnitt dem Querschnitt des Anschlags annähernd entspricht.

In einer zweiten erfindungsgemäßen Ausführung der Befestigungsanordnung ist das spezifisch geformte Kopfteil ein Gewindebolzenende ist und das negative Gegenstück eine entsprechende Gewindebohrung im Häckselmesser.

Indern der Schnellverschluss ein Schließblech aufweist ist und das Schließblech in der Verschlussposition den Schwenkbereich wenigstens eines Häckselmessers begrenzt, wird verhindert, dass das Häckselmesser in die Montageposition verschwenkt werden kann.

Damit das Schließblech auf der Welle verschiebbar ist, ohne es von der Welle lösen zu müssen, weist das Schließblech Langlöcher auf, die sich in Umfangsrichtung der Welle erstrecken, wobei das Schließblech über durch die Langlöcher ragende Schraubenverbindungen mit der Welle verbunden ist

In einer weiteren erfindungsgemäßen Ausführung versperrt der Schnellverschluss zumindest teilweise den Zugang zu wenigstens einem freien Ende des Bolzens, so dass das Häckselmesser nicht auf den Bolzen aufgeschoben oder vom Bolzen heruntergenommen werden kann.

In einer besonders vorteilhaften Ausgestaltung ist der Schnellverschluss als Federelement ausgeführt und weist einen oberen Teil auf, das in der Verschlussposition das freie Ende des Bolzens zumindest teilweise umgreift, so dass das Federelement in der Verschlussposition lagegesichert ist.

In vorteilhafter Weiterbildung ist das Federelement um eine Drehachse schwenkbar an der Konsole angeordnet, so dass eine einfache, kostengünstige Befestigung ohne zusätzliche Elemente an der Welle möglich ist und das Federelement einfach von der Verschluss- in die Öffnungsposition und umgekehrt bewegbar ist.

In vorteilhafter Ausgestaltung der Erfindung weist die Welle auf ihrem Umfang wenigstens eine Konsole auf, wobei der Bolzen an der Konsole angeordnet ist, so dass die Häckselmesser auf einfache Weise um den Bolzen drehbar mit der Welle verbunden werden können.

Vorteilhafterweise ist die Drehachse des Federelements parallel zur Längsachse des Bolzens angeordnet, so dass die gegen das Federelement anschlagende Häckselmesser keine axialen Kräfte auf das Federelement bewirken.

Damit der obere Teil des Federelements beispielsweise nicht durch zwischen Bolzen und Federelement angesammeltes und aufgestautes Erntegut aufgebogen werden kann, weist der elastische, obere Teil des Federelements eine Ausnehmung auf, in die ein Sicherungselement eingreift, das schwenkbeweglich mit der Konsole verbunden ist

Weitere vorteilhafte Ausgestaltungen sind Gegenstand weiterer Unteransprüche und werden nachfolgend an Hand des in mehrerer Figuren dargestellten Ausführungsbeispiels näher erläutert.

Es zeigen:
- Fig.: 1 eine schematische Seitenansicht auf einen Mähdrescher,
- Fig. 2: eine perspektivische Darstellung des Strohhäckslers,
- Fig. 3: eine Seitenansicht des Strohhäckslers mit einer ersten Ausführung einer erfindungsgemäßen Befestigungsanordnung bei der Messermontage

- Fig. 4: eine Seitenansicht des Strohhäckslers mit einer ersten Ausführung einer erfindungsgemäßen Befestigungsanordnung im Betrieb,
- Fig. 5: eine perspektivische Ansicht einer zweiten erfindungsgemäßen Befestigungsanordnung beim Messerwechsel,
- Fig. 6: eine perspektivische Ansicht einer zweiten erfindungsgemäßen Befestigungsanordnung im Betrieb.

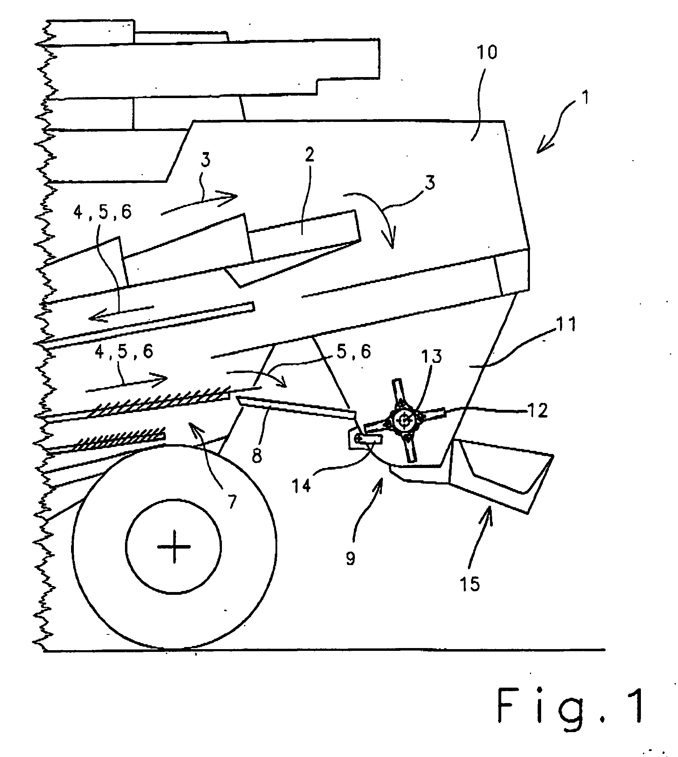

Fig.1 zeigt die Seitenansicht des hinteren Teils eines Mähdreschers 1. Über die Hordenschüttler 2 wird ein ausgedroschenes Stroh-Spreu-Gemisch 3 in den hinteren Bereich des Mähdreschers 1 gefördert, wobei die noch im Stroh-Spreu-Gemisch 3 befindlichen Kömer 4 sowie evtl. Kurzstroh 5 und Spreu 6 abgetrennt werden. Die Körner 4, das Kurzstroh 5 und die Spreu 6 werden auf an sich bekannte Weise einer Siebeinrichtung 7 zugeführt. Gleichzeitig wird ein von dem nicht dargestellten Dreschwerk abgeschiedenes Kom-Spreu-Gemisch 4, 5, 6 zu der Siebeinrichtung 7 gefördert. In der Siebeinrichtung 7 werden die Kömer 4 vom Kurzstroh 5 und der Spreu 6 getrennt. Der über die Siebeinrichtung 7 überlaufende im wesentlichen aus Kurzstroh 5 und Spreu 6 bestehende Siebüberlauf gelangt über einen Zuführboden 8 in einen Strohhäcksler 9, der unterhalb einer Strohausfallhaube 10 angeordnet ist. Auch das über die Hordenschüttler 2 bewegte Stroh-Spreu-Gemisch 3 sowie ein geringer Anteil an Verlustkörnem fällt am Ende der Hordenschüttler 2 über die Strohausfallhaube 10 in den Strohhäcksler 9. Der Strohhäcksler 9 besteht aus einer in einem Häckslergehäuse 11 gelagerten, rotierend angetriebenen Welle 13, die auf ihrem Umfang mit Häckselmessern 12 besetzt ist. Die Häckselmesser 12 kämmen mit in dem Häckslergehäuse 11 starr befestigten Gegenmessern 14. Das Kurzstroh 5, die Spreu 6 und das Stroh-Spreu-Gemisch 3 werden von dem Strohhäcksler 9 zerkleinert und beschleunigt Dem Strohhäcksler 9 kann eine an sich bekannte Breitverteileinrichtung 15 nachgeordnet sein, die den aus dem Strohhäcksler 9 austretenden, zerkleinerten Emtegutstrom gleichnräßig auf dem Feld verteilt, um den Verrottungsprozess des Erntegutes zu begünstigen.

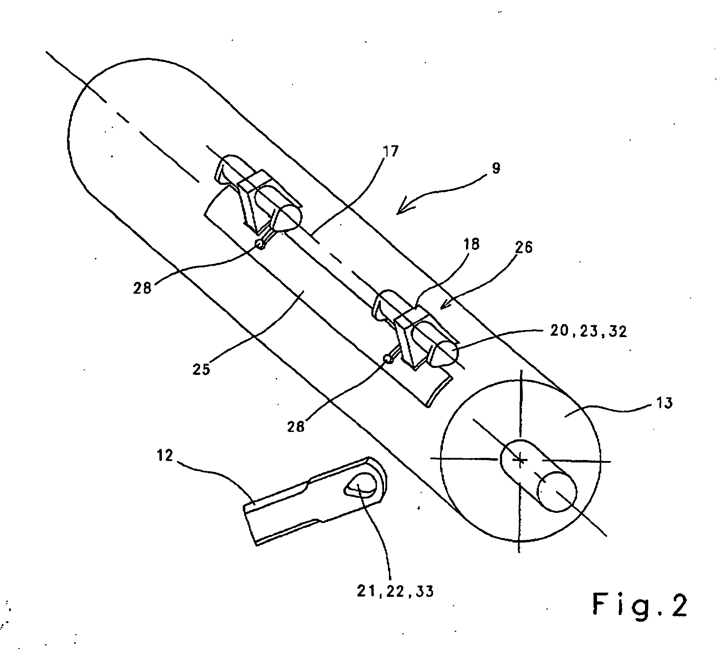

Fig.2 zeigt eine perspektivische Ansicht des Strohhäckslers 9 mit einer ersten Ausführungsform einer erfindungsgemäßen Befestigungsanordnung für die Häckselmesser 12. Auf dem Umfang der Welle 13 sind in mehreren parallel zur Drehachse der Welle 13 verlaufenden Reihen 17 Konsolen 18 angeordnet, wobei die Konsolen 18 einer Reihe 17 gleichmäßig beabstandet über die Breite der Welle 13 verteilt sind. Die Konsolen 18 selbst erstrecken sich in Drehrichtung der Welle 13 und an jeder Konsole 13 ist ein parallel zur Achsrichtung der Welle 13 verlaufender zylindrischer Bolzen 19 angeordnet, der starr mit der Konsole 18 verbunden ist. An den freien Enden der Bolzen 19 ist jeweils ein Kopfteil 20 angeordnet, welches als spezifisch geformtes Kopfteil 34 in Form eines Anschlags 32 mit nockenförmigen Querschnitt 23 ausgeführt ist. Um das Häckselmesser 12 auf den Bolzen 19 aufschieben zu können, weist das Messer 12 ein zu dem spezifisch geformten Kopfteil 34 negatives Gegenstück 33 in Form einer Bohrung 21 auf, deren Querschnitt 22 dem nockenförmigen Querschnitt 23 des Anschlags 32 entspricht Auf jeder Seite der Konsole 18 ist jeweils ein Häckselmesser 12 auf den Bolzen 19 aufschiebbar, es könnten jedoch auch mehr als zwei Häckselmesser 12 an jeder Konsole 18 befestigt werden.
Neben jeder Reihe 17 Konsolen 18 ist auf dem Umfang der Welle 13 ein erfindungsgemäßer, an späterer Stelle noch näher erläuterter Schnellverschluss 26 angeordnet, der ein Schließblech 25 aufweist, das sich über die Breite der Welle 13 erstreckt. Das Schließblech 25 weist an beiden Enden Langlöcher 27 auf, durch die er über lösbare Schraubenverbindungen 28 in Umfangsrichtung verschieblich mit der Welle 13 verbunden ist.

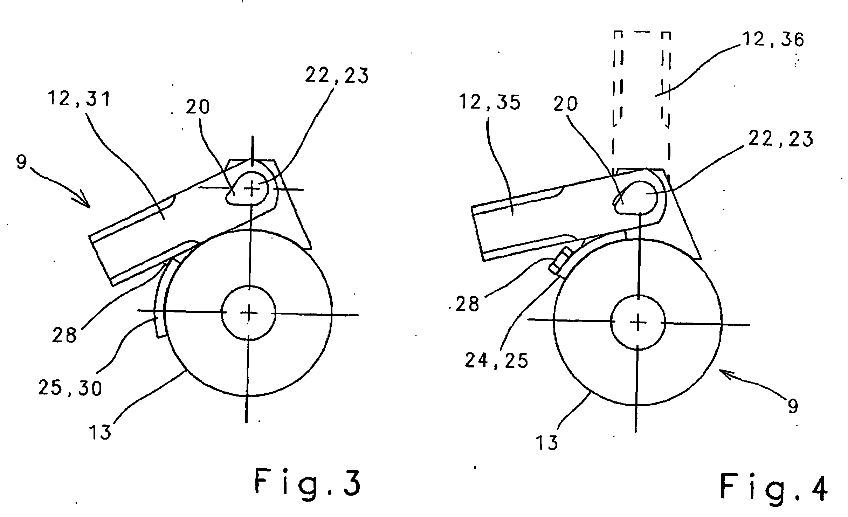

Fig. 3 zeigt eine Seitenansicht des Strohhäckslers 9. Um das Häckselmesser 12 auf den mit der Welle 13 verbundenen Bolzen 19 aufschieben zu können, werden die Schraubenverbindungen 28 gelöst und das Schließblech 25 auf dem Umfang der Welle 13 in eine Öffnungsposition 30 verschoben. Wenn sich das Schließblech 25 in der Öffnungsposition 30 befindet, kann das Häckselmesser 12 in eine Montageposition 31 verschwenkt werden, in der der Querschnitt 22 der Bohrung 21 des Messers 12 und der Querschnitt 23 des Anschlags 32 kongruent sind, so dass Häckselmesser 12 über den Anschlag 32 hinweg auf den Bolzen 19 aufgeschoben werden kann. Auf gleiche Weise werden weitere Häckselmesser 12 auf die Bolzen 19 der benachbarten Konsolen 18 der betreffenden Reihe 17 (Fig.1) montiert.
Anschließend wird wie in Fig. 4 dargestellt, das Schließblech 25 in eine Verschlussposition 24 verschoben und mit den Schraubenverbindungen 28 an der Welle 13 gesichert. Das Schließblech 25 begrenzt in der Verschlussposition 24 den Schwenkbereich des Häckslemessers 13 derart, das keine vollständige Überdeckung des Querschnitt 22 der Bohrung 21 des Messers 12 mit dem Querschnitt 23 des Anschlags 20 erreicht werden kann, so dass das Messer 12 in allen erreichbaren Arbeitspositionen 29 gegen den Anschlag 20 anschlägt und somit auf dem Bolzen 19 gesichert ist.

Es ist eine weitere Ausführung denkbar, bei der das spezifisch geformte Kopfteil ein Gewindebolzenende ist und das negative Gegenstück eine entsprechende Gewindebohrung im Häckselmesser ist. Der Bolzen ist im Gegensatz zum ersten Ausführungsbeispiel um seine Längsachse drehbar mit der Konsole verbunden, so dass Häckselmesser und Bolzen zueinander verdrehbar sind, um das Gewindeende mit der Gewindebohrung verbinden zu können. Nachdem das Messer auf dem Gewindeende des Bolzens montiert ist, wird der Bolzen verdrehfest mit der Konsole verbunden. Dabei ist das Häckselmesser so weit auf das Gewindeende aufgedreht, dass das Häckselmesser gegen die Welle anschlägt bevor es beim Schwenken vom Bolzen herunterdrehen kann und somit auf dem Bolzen gesichert ist. Damit auf beiden Seiten des Bolzens Häckselmesser montierbar sind, sind die Gewindebohrung im Häckselmesser bzw. das Gewindebolzenende auf einer Seite des Bolzens als Linksgewindepaar und auf der gegenüberliegenden Seite als Rechtsgewindepaar auszuführen.

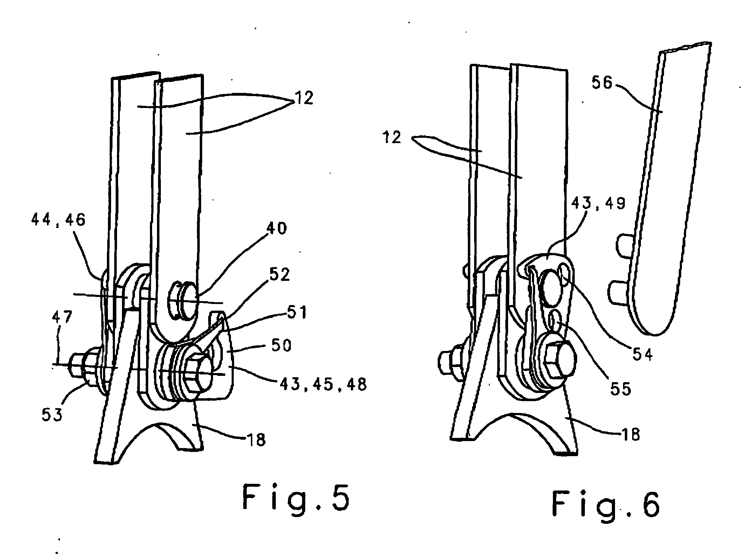

Fig. 5 zeigt eine perspektivische Ansicht einer zweiten Ausführung einer erfindungsgemäßen Befestigungsanordnung für die Häckselmesser 12. Die Konsolen 18 sind auf dem Umfang der Welle 13 des Strohhäckslers (nicht dargestellt) angeordnet. An der Konsole 18 ist ein Bolzen 40 angeordnet, der über an späterer Stelle noch näher erläuterte Halteelemente 42 mit der Konsole 18 verbunden ist. Auf den Bolzen 40 ist auf jeder Seite der Konsole 18 jeweils ein Häckselmesser 12 aufgeschoben, wobei die Häckselmesser 12 drehbar um die Längsachse des Bolzens 40 gelagert sind. An jeder Konsole18 sind beidseitig erfindungsgemäße, als Federelemente 43, 44 ausgebildete Schnellverschlüsse 45, 36 angeordnet, die um eine Drehachse 47 schwenkbar an der Konsole 18 angeordnet sind, wobei die Drehachse 47 parallel zur Längsachse des Bolzens 40 verläuft. Das rechte Federelement 44 ist in eine Öffnungsposition 48 verschwenkt, in der das Häckselmesser 12 auf den Bolzen 40 aufsteckbar bzw. vom Bolzen 40 herunternehmbar ist. Um die Häckselmesser 12 auf dem Bolzen 40 axial zu sichern, werden die Federelemente 43, 44 jeweils aus einer Öffnungsposition 48 in eine Verschlussposition 49 (siehe Fig. 6) verschwenkt, so dass der Zugang zu dem freien Ende des Bolzens 40 gesperrt ist und jedes Häckselmesser 12 zwischen jeweils einem Halteelement 42 und einem Federelement 43,44 auf dem Bolzen 40 gehalten wird.
Beim Anpressen des Federelementes 43, 44 gegen den Bolzen 40 wird der elastische obere Teil 50 des Federelements 43,44 derart aufgebogen, dass das Federelement 43, 44 über den Bolzen 40 hinweg schwenkbar ist. In der Verschlussposition 49 kehrt der zuvor verformte elastische obere Teil 50 des Federelements 43, 44 in seine Ausgangsform zurück und greift hinter den Bolzen 40, um zu verhindern, dass das Federelement 43, 44 aus der Verschlussposition 49 heraus verschwenken kann. Zusätzlich ist an der Konsole 18 ein um die Drehachse 47 drehbares Sicherungselement 51 angeordnet, dass in eine Ausnehmung 52 im oberen Teil 50 des Federelementes 43, 44 eingehakt ist. Dieses Sicherungselement 51 verhindert, das der obere Teil 50 des Federelementes 43, 44 aufgebogen werden kann. Das Sicherungselement 51 ist als dünnes, elastisches Blech ausgeführt, das vor dem Schwenken des Federelementes 43, 44 von der Öffnungs- 48 in die Verschlussposition 49 und umgekehrt mit einem Werkzeug 56 gebogen wird, um es außer Eingriff mit dem Federelement 43, 44 zu bringen und gegenüber dem Federelement 43, 44 zu verschwenken, so dass es nicht wieder in die Ausnehmung 52 einhakt.
Um das Federelement 43, 44 beim Messerwechsel einfacher öffnen zu können, sind in das Federelement 43, 44 zwei Bohrungen 54, 55 eingebracht, in die ein Werkzeug einführbar ist. Das Werkzeug dient als Hebel, um den oberen Teil 48 des Federelementes 43, 44 aufzubiegen, so dass das Federelement 43, 44 über den Bolzen 40 hinweg schwenkbar ist.

Die Halteelemente 42, die Federelemente 43, 44 sowie die Sicherungselemente 51 sind gemeinsam über eine Schraubenverbindung 53 mit der Konsole 18 lösbar verbunden, die in der Drehachse 47 angeordnet ist.

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung zu verlassen.

Bezugszeichenliste:
- 1: Mähdrescher
- 2: Hordenschüttler
- 3: Stroh-Spreu-Gemisch
- 4: Körner
- 5: Kurzstroh
- 6: Spreu
- 7: Siebeinrichtung
- 8: Zuführbleche
- 9: Strohhäcksler
- 10: Strohausfallhaube
- 11: Häckslergehäuse
- 12: Häckselmesser
- 13: Welle
- 14: Gegenmesser
- 15: Breitverteileinrichtung
- 16:
- 17: Reihe
- 18: Konsole
- 19: Bolzen
- 20: Kopfteil
- 21: Bohrung
- 22: Querschnitt
- 23: Querschnitt
- 24:
- 25: Schließblech
- 26: Schnellverschluss
- 27: Langloch
- 28: Schraubenverbindung
- 29: Arbeitsposition
- 30: Öffnungsposition
- 31: Montageposition
- 32: Anschlag
- 33: negatives Gegenstück
- 34: spezifisch geformtes Kopfteil
- 35:
- 36:
- 37:
- 38:
- 39:
- 40: Bolzen
- 41:
- 42: Halteelement
- 43: Federelement
- 44: Federelement
- 45: Schnellverschluss
- 46: Schnellverschluss
- 47: Drehachse
- 48: Öffnungsposition
- 49: Verschlussposition
- 50: elastischer, oberer Teil
- 51: Sicherungselement
- 52: Ausnehmung
- 53: Schraubenverbindung
- 54: Bohrungen
- 55: Bohrungen
- 56: Werkzeug

## Patentansprüche

1. Strohhäcksler (9) mit einer rotierend antreibbaren Welle (13) und wenigstens einem Häckselmesser (12) und einer Befestigungsanordnung zum Verbinden des wenigstens einen Häckselmessers (12) mit der rotierend antreibbaren Welle (13), wobei das Häckselmesser (12) um einen an der Welle (13) angeordneten Bolzen (19, 40) verschwenkbar an der Welle (13) angeordnet ist,
**dadurch gekennzeichnet,**
**dass** das Häckselmesser (12) auf wenigstens ein freies Ende der mit der Welle (13) verbundenen Bolzen (19, 40) aufgeschoben und mit wenigstens einem mit der Welle (13) verbundenen Schnellverschluss (26, 45, 46) auf dem Bolzen (19, 40) gesichert ist, wobei der Schnellverschluss (26, 45, 46) in wenigstens eine Öffnungsposition (30, 48) und in wenigstens eine Verschlussposition (49, 24) bewegbar ist und in der Verschlussposition (49, 24) mittels eines mit **der Welle (13) oder mittels eines mit einer an der Welle (13) angeordneten Konsole (18) verbundenen** Sicherungselementes gesichert wird.

2. Strohhäcksler (9) nach wenigstens einem der vorhergehenden Ansprüche,
**dadurch gekennzeichnet,**
**dass** der Schnellverschluss (26) in der Verschlussposition (24) den Schwenkbereich wenigstens eines Häckselmessers (12) und/oder wenigstens eines Bolzens (19) begrenzt.

3. Strohhäcksler (9) nach wenigstens einem der vorhergehenden Ansprüche,
**dadurch gekennzeichnet,**
**dass** die Welle (13) auf ihrem Umfang wenigstens eine Konsole (18) aufweist, wobei der Bolzen (19, 40) an der Konsole (18) angeordnet ist.

4. Strohhäcksler (9) nach wenigstens einem der vorhergehenden Ansprüche,
**dadurch gekennzeichnet,**
**dass** der Bolzen (19) drehfest mit der Konsole (40) verbunden ist und an wenigstens einem freien Ende ein Kopfteil (20) aufweist.

5. Strohhäcksler (9) nach wenigstens einem der vorhergehenden Ansprüche,
**dadurch gekennzeichnet,**
**dass** das Kopfteil (20) ein spezifisch geformtes Kopfteil (34) ist und das Häckselmesser (12) ein zu dem spezifisch geformten Kopfteil (34) des Bolzens (19) negatives Gegenstück (33) aufweist.

6. Strohhäcksler (9) nach Anspruch 5,
**dadurch gekennzeichnet,**
**dass** das spezifisch geformte Kopfteil (20) ein Anschlag (32) mit einen nockenförmigen Querschnitt (23) ist und das Häckselmesser (12) als negatives Gegenstück (33) eine Bohrung (21) aufweist, deren Querschnitt (22) dem Querschnitt (23) des Anschlags (32) annähernd entspricht.

7. Strohhäcksler (9) nach Anspruch 5,
**dadurch gekennzeichnet,**
**dass** das spezifisch geformte Kopfteil (34) ein Gewindebolzenende ist und das negative Gegenstück (33) eine entsprechende Gewindebohrung im Häckselmesser (12) ist.

8. Strohhäcksler (9) nach wenigstens einem der vorhergehenden Ansprüche,
**dadurch gekennzeichnet,**
**dass** der Schnellverschluss (26) ein Schließblech (25) aufweist, und das Schließblech (25) in der Verschlussposition (24) den Schwenkbereich wenigstens eines Häckselmessers (12) begrenzt.

9. Strohhäcksler (9) nach wenigstens einem der vorhergehenden Ansprüche,
**dadurch gekennzeichnet,**
**dass** das Schließblech (25) Langlöcher (27) aufweist, die sich in Umfangsrichtung der Welle (13) erstrecken, wobei das Schließblech (25) über durch die Langlöcher (27) ragende Schraubenverbindungen (28) mit der Welle (13) verbunden ist.

10. Strohhäcksler (9) wenigstens einem der vorhergehenden Ansprüche,
**dadurch gekennzeichnet,**
**dass** der Schnellverschluss (45, 46) in der Verschlussposition (49) den Zugang zu wenigstens einem freien Ende des Bolzen (19) versperrt.

11. Strohhäcksler (9) nach wenigstens einem der vorhergehenden Ansprüche,
**dadurch gekennzeichnet,**
**dass** der Schnellverschluss (45, 46) als Federelement (43, 44) ausgeführt ist, wobei das Federelement (43, 44) einen elastischen oberen Teil (50) aufweist, der in der Verschlussposition (49) das freie Ende des Bolzens (40) wenigstens teilweise umgreift.

12. Strohhäcksler (9) nach wenigstens einem der vorhergehenden Ansprüche,
**dadurch gekennzeichnet,**
**dass** das Federelement (43, 44) um eine Drehachse (47) verschwenkbar an der Konsole (18) angeordnet ist.

13. Strohhäcksler (9) nach wenigstens einem der vorhergehenden Ansprüche,
**dadurch gekennzeichnet,**
**dass** die Drehachse (47) annähernd parallel zur Längsachse des Bolzens (40) angeordnet ist.

14. Strohhäcksler (9) nach wenigstens einem der vorhergehenden Ansprüche,
**dadurch gekennzeichnet,**
**dass** der elastische, obere Teil (50) des Federelements (43, 44) eine Ausnehmung (52) aufweist, in die ein Sicherungselement (51) eingreift, das schwenkbeweglich mit der Konsole (18) verbunden ist.

## Claims

1. A straw chopper (9) comprising a shaft (13) drivable in rotation and at least one chopping blade (12) and a fixing arrangement for connecting the at least one chopping blade (12) to the shaft (13) drivable in rotation, wherein the chopping blade (12) is arranged on the shaft (13) pivotably about a pin (19, 40) arranged on the shaft (13),
**characterised in that**
the chopping blade (12) is pushed on to at least one free end of the pins (19, 40) connected to the shaft (13) and secured on the pin (19, 40) with at least one quick-action fastener (26, 45, 46) connected to the shaft (13), wherein the quick-action fastener (26, 45, 46) is movable into at least one opening position (30, 48) and into at least one fastening position (49, 24) and is secured in the fastening position (49, 24) by means of a securing element connected to the shaft (13) or by means of a securing element connected to a bracket (18) arranged on the shaft (13).

2. A straw chopper (9) according to claim 1 **characterised in that** the quick-action fastener (26) in the fastening position (24) limits the pivotal range of at least one chopping blade (12) and/or at least one pin (19).

3. A straw chopper (9) according to at least one of the preceding claims **characterised in that** on its periphery the shaft (13) has at least one bracket (18), the pin (19, 40) being arranged on the bracket (18).

4. A straw chopper (9) according to at least one of the preceding claims **characterised in that** the pin (19) is non-rotatably connected to the bracket (40) and has a head portion (20) at at least one free end.

5. A straw chopper (9) according to at least one of the preceding claims **characterised in that** the head portion (20) is a specifically shaped head portion (34) and the chopping blade (12) has a counterpart portion (33) which is of negative configuration relative to the specifically shaped head portion (34) of the pin (19).

6. A straw chopper (9) according to claim 5 **characterised in that** the specifically shaped head portion (20) is an abutment (32) of a cam-shaped cross-section (23) and the chopping blade (12) as the negative counterpart portion (33) has a bore (21), the cross-section (22) of which approximately corresponds to the cross-section (23) of the abutment (32).

7. A straw chopper (9) according to claim 5 **characterised in that** the specifically shaped head portion (34) is a screwthreaded pin end and the negative counterpart portion (33) is a corresponding screwthreaded bore in the chopping blade (12).

8. A straw chopper (9) according to at least one of the preceding claims **characterised in that** the quick-action fastener (26) has a closing plate (25) and the closing plate (25) in the fastening position (24) limits the pivotal range of at least one chopping blade (12).

9. A straw chopper (9) according to at least one of the preceding claims **characterised in that** the closing plate (25) has slots (27) extending in the peripheral direction of the shaft (13), wherein the closing plate (25) is connected to the shaft (13) by way of screw connections (28) projecting through the slots (27).

10. A straw chopper (9) according to at least one of the preceding claims **characterised in that** the quick-action fastener (45, 46) in the fastening position (49) bars access to at least one free end of the pin (19).

11. A straw chopper (9) according to at least one of the preceding claims **characterised in that** the quick-action fastener (45, 46) is in the form of a spring element (43, 44), wherein the spring element (43, 44) has an elastic upper portion (50) which at least partially embraces the free end of the pin (40) in the fastening position (49).

12. A straw chopper (9) according to at least one of the preceding claims **characterised in that** the spring element (43, 44) is arranged on the bracket (18) pivotably about an axis of rotation (47).

13. A straw chopper (9) according to at least one of the preceding claims **characterised in that** the axis of rotation (47) is arranged approximately parallel to the longitudinal axis of the pin (40).

14. A straw chopper (9) according to at least one of the preceding claims **characterised in that** the elastic upper portion (50) of the spring element (43, 44) has an opening (52) into which engages a securing element (51) which is pivotably movably connected to the bracket (18).

## Revendications

1. Hache-paille (9) comportant un arbre (13) pouvant être entraîné en rotation, au moins un couteau de hachage (12) et un dispositif de fixation pour relier à l'arbre (13) le couteau de hachage (12) au nombre d'un au moins, ce couteau (12) étant monté sur l'arbre (13) en pouvant basculer autour d'un pivot (19, 40) monté sur cet arbre, **caractérisé en ce que** le couteau de hachage (12) est glissé sur au moins une extrémité libre du pivot (19, 40) relié à l'arbre (13) et sécurisé sur ce pivot au moyen d'au moins un verrouillage rapide (26, 45, 46) relié à l'arbre (13), ce verrouillage pouvant se déplacer pour prendre une position d'ouverture (30, 48) au nombre d'une au moins et une position d'ouverture (49, 24) au nombre d'une au moins, et dans cette dernière, il est sécurisé au moyen d'un élément de sécurité qui est relié à l'arbre (13) ou qui est relié à une console (18) montée sur l'arbre.

2. Hache-paille (9) selon la revendication 1, **caractérisé en ce que** le verrouillage rapide (26), quand il est en position de verrouillage (24) limite la plage de basculement d'au moins un couteau de hachage (12) et/ou d'au moins un pivot (19).

3. Hache-paille (9) selon au moins une des revendications précédentes, **caractérisé en ce que** l'arbre (13) présente sur sa périphérie au moins une console (18) et sur celle-ci est monté le pivot (19, 40).

4. Hache-paille (9) selon au moins une des revendications précédentes, **caractérisé en ce que** le pivot (19) est solidaire en rotation de la console (40) et présente à au moins une extrémité libre, une partie de tête (20).

5. Hache-paille (9) selon au moins une des revendications précédentes, **caractérisé en ce que** la partie de tête (20) est une partie de tête (34) de forme spécifique et le couteau de hachage (12) présente une contrepartie (33) négative par rapport à la partie de tête (34) à forme spécifique.

6. Hache-paille (9) selon la revendication 5, **caractérisé en ce que** la partie de tête (20) de forme spécifique présente une butée (32) à section transversale (23) en forme de came et le couteau de hachage (12) présente en tant que contrepartie (33) un alésage (21) dont la section transversale correspond à peu près à celle de la butée (32).

7. Hache-paille (9) selon la revendication 5, **caractérisé en ce que** la partie de tête (34) de forme spécifique est une extrémité d'un pivot fileté et la contrepartie négative (33) est un alésage fileté correspondant prévu dans le couteau de hachage.

8. Hache-paille (9) selon au moins une des revendications précédentes, **caractérisé en ce que** le verrouillage rapide (26) présente une tête de fermeture (25) et celle-ci, dans la position de verrouillage, limite la plage de basculement d'au moins un couteau de hachage (12).

9. Hache-paille (9) selon au moins une des revendications précédentes, **caractérisé en ce que** la tôle de fermeture (25) présente des trous allongés (27) s'étendant selon la direction périphérique de l'arbre (13) et cette tôle est reliée à l'arbre (13) par des liaisons filetées (23) traversant les trous allongés (27).

10. Hache-paille (9) selon au moins une des revendications précédentes, **caractérisé en ce que** la fermeture rapide (45, 46), en position de verrouillage (49) bloque l'accès à au moins une extrémité libre du pivot (19).

11. Hache-paille (9) selon au moins une des revendications précédentes, **caractérisé en ce que** la fermeture rapide (45, 46) est constituée par un élément élastique (43, 44) et celui-ci présente une partie supérieure (50) élastique qui, en position de verrouillage, enveloppe au moins en partie l'extrémité libre du pivot (40).

12. Hache-paille (9) selon au moins une des revendications précédentes, **caractérisé en ce que** l'élément élastique (43, 44) peut basculer sur la console (18) autour d'un axe de rotation (47).

13. Hache-paille (9) selon au moins une des revendications précédentes, **caractérisé en ce que** l'axe de rotation (47) est à peu près parallèle à l'axe longitudinal du pivot (40).

14. Hache-paille (9) selon au moins une des revendications précédentes, **caractérisé en ce que** la partie supérieure élastique (50) de l'élément élastique (43, 44) présente un évidement (52) dans lequel est engagé l'élément de sécurité (51) qui est relié à la console (18) en pouvant basculer.
